# EUROPÄISCHE PATENTSCHRIFT

(11) **EP 0 541 895 B1**
(45) Veröffentlichungstag und Bekanntmachung des Hinweises auf die Patenterteilung: **27.12.1995**
(21) Anmeldenummer: 92108648.4
(22) Anmeldetag: 22.05.1992
(51) Int. Cl.: G01N 27/04

(54) **Sonde für einen Partikelsensor**
Particle sensor probe
Sonde pour un capteur de particules

(30) Priorität: 09.11.1991 DE 4136911; 24.12.1991 DE 4142959
(43) Veröffentlichungstag der Anmeldung: 19.05.1993
(73) Patentinhaber: Keesmann, Till, D-69115 Heidelberg (DE)
(72) Erfinder: Keesmann, Till, D-69115 Heidelberg (DE)
(74) Vertreter: Clemens, Gerhard, Dr.-Ing.

(56) Entgegenhaltungen:
- WO-A-84/03147
- DD-A- 219 587
- DE-A- 3 414 542
- GB-A- 2 029 028
- US-A- 4 656 832

## Beschreibung

Die Erfindung betrifft eine Sonde für einen Partikelsensor, auf deren aktiver Oberfläche zum Messen der Beladung eines Mediums mit Meßpartikeln diese aus dem an der Sonde vorbeströmenden Medium niedergeschlagen werden und dann im Niederschlag vermessen und beseitigt werden.

Bei einem aus der DD-PS 219587 bekannten Partikelsensor, der zur Ermittlung der Beladung von Verbrennungsabgasen mit unverbrannten Teilchen dient, werden als Sonde zwei Metallelektroden eingesetzt, zwischen denen das durchströmende Abgas einen Niederschlag bildet, dessen Menge und Qualität durch Messen des Widerstandes ermittelt werden soll. Anschließend werden die Elektroden geglüht, so daß der Niederschlag verdampft und die Sonde zu einer neuen Messung bereit ist.

Aufgabe der Erfindung ist es, den Niederschlag möglichst selektiv zu begünstigen, um die Beladung ausgewählter Meßpartikel genauer messen zu können.

Diese Aufgabe wird dadurch gelöst, daß die aktive Oberfläche der Sonde aus elektrisch leitendem Nichtmetall besteht.

Wesentlich wird der Niederschlag beeinflußt durch die Qualität der aktiven Oberfläche und diese ist bei elektrisch leitenden Nichtmetallen unterschiedlich gegenüber der von Metallen und auch von Nichtmetall zu Nichtmetall. Auf diese Weise läßt sich durch Auswahl des eingesetzten Nichtmetalls bestimmen, welche Art von Meßpartikel aus einer gegebenenfalls angebotenen Mischung verschiedener Meßpartikel bevorzugt niedergeschlagen werden, so daß man auf diese Weise selektiv, bezogen auf die ausgewählten, bevorzugten Meßpartikel, Meßergebnisse gewinnt. Der Einsatz elektrisch leitender Materialien macht es möglich, den Niederschlag durch elektrische Potentiale zu steuern und den erfolgten Niederschlag auf elektrischem Wege zu vermessen, wie dies auch bei der eingangs beschriebenen bekannten Sonde der Fall ist, so daß die Erfindung auch die Vorteile der metallischen Sonde nutzen kann.

Für die Erzielung der mit der Erfindung angestrebten Selektionswirkung genügt es, die aktive Oberfläche aus elektrisch leitendem Nichtmetall auszugestalten. Wenn nur eine Beschichtung der Sonde mit einem reaktionsempfindlichen Nichtmetall vorgesehen ist, empfiehlt es sich, diese Schicht sehr dünn, eventuell nur einen oder wenige Tausendstel Millimeter stark zu machen, um die Reaktion und damit die Ansprechempfindlichkeit zu beschleunigen.

Der Innenkörper kann aus Stabilitätsgründen oder aus anderen Gründen aus anderem Material bestehen, es muß nur sichergestellt sein, daß wenn nötig eine elektrische Stromleitung gegeben ist und dazu empfiehlt es sich, den Innenkörper aus elektrisch leitendem Material herzustellen. Wenn das elektrisch leitende Nichtmetall solche Materialqualitäten hat, daß man die Sonde aus diesem Material massiv ausbilden kann, dann ist dies entsprechend einer Weiterbildung eine einfache Lösung.

Die Selektion beim Niederschlag wird auch beeinflußt durch die Charakteristika der übrigen Teile des begleitenden Mediums, seien sie gasförmig, seien sie Partikel. Das muß man mitberücksichtigen bei der Auswahl desjenigen Nichtmetalls, das man für eine angestrebte Selektion einsetzt. Daneben sind Stabilität, Verarbeitbarkeit, Beständigkeit im behandelten Medium, Möglichkeiten der Beseitung des Niederschlages, unterstützt durch Beschallen mit Ultraschall und/oder durch Ausglühen und dergleichen Kriterien bei der Auswahl des für den betreffenden Einsatzfall optimalen Nichtmetalls zu berücksichtigen.

Unter diesem Gesichtspunkt kommen als Nichtmetalle vorzugsweise in Verbindung mit der Erfindung in Betracht:
1. Fulleren - sogenannte Käfigmoleküle aus sphärisch angeordneten C-Atomen - vorzugsweise mit der chemischen Summenformel XᵣC₂ₙ,
   mit:
   X = H, Li, Na, K, Rb, Cs und/oder Fr;
   r = 0, 1, 2 ...;
   n = 16, 17, 18 ...;
   wobei zur Begünstigung der elektrischen Stromleitung Fremdatome, vorzugsweise H, Li, Na, K, Rb, Cs und/oder Fr dem Fulleren durch Dotierung, Einlagerung, Anlagerung und/oder Beimischung zugefügt sind, vorzugsweise entsprechend der Summenformel K₃C₆₀.
2. elektrisch leitende Keramik
3. supraleitfähige Keramik
4. elektrisch leitfgähiger Kunststoff, vorzugsweise Polymere, Polymerabkömmlinge, Polyacetylen, Polyparaphenylen, Polypyrrol, Polythiopen und/oder Polyanilin.
5. elektrisch leitendes Metalloxyd.

Man kann die Fullerene unterschiedlich auftragen, zum Beispiel mit Hilfe von Laser. Vorteilhaft ist elektrolytischer Auftrag, weil er einfach zu handhaben ist und den Auftrag der Käfigmoleküle leicht steuerbar macht, beispielsweise durch elektrische Felder.

Vorteilhaft und leicht sehr präzise steuerbar ist es auch, wenn man die Fullerene, die die aktive Oberfläche bilden, auf den Kristallflächen eines Halbleiters, vorzugsweise Galliumarsenid, Gallium-Aluminiumarsenid, Aluminium-Galliumarsenid, Indiumphosphid oder Indiumgalliumarsenid, aufwachsen läßt. Der Halbleiter kann dann gleichzeitig als Stromzuleitung zu den Fullerenen dienen.

Die die aktive Oberfläche bildenden Fullerene sind vorzugsweise in Form einer oder mehreren monomolekularen Schichten mit Kristallstruktur aufgetragen. Dann ergibt sich über die ganze aktive Oberfläche ein gleichförmiges Muster der elektrisch aktiven Elemente.

Die Fullerene einer monomolekularen Schicht können in einer einzigen Ebene angeordnet sein, es kann sich um gleichgroße Moleküle handeln, es kann sich um gleichdotierte Moleküle handeln und/oder diese Moleküle können hinsichtlich ihrer Dotierung sphärisch identisch in der Schicht angeordnet sein.

Man kann die monomolekulare Schicht aber auch hinsichtlich der aufgeführten Kriterien unterschiedlich gestalten, allerdings unter Wahrung eines Rasters, das eine gleichmäßige Verteilung der aktiven Elemente bedingt. Eine dementsprechende Ausgestaltung ist dadurch gekennzeichnet, daß die die aktive Oberfläche bildenden Fullerene in mehrere Gruppen unterteilt sind, daß die Fullerene der einzelnen Gruppen gemischt, ein Raster bildend angeordnet sind, daß die Fullerene einer Gruppe unter sich gleichgroß, gleichdotiert und mit Bezug auf ihre Dotierung sphärisch gleich orientiert angeordnet sind und daß die Fullerene unterschiedlicher Gruppen sich hinsichtlich Größe, Dotierung, sphärischer Anordnung und/oder ihrer Anordnung in verschiedenen Ebenen voneinander unterscheiden.

Zur Beseitung des Niederschlages nach erfolgter Vermessung, also zum Reinigen der Sonde für eine neue Messung, empfiehlt es sich, den Niederschlag durch Ausglühen zu verdampfen. Insbesondere in den Fällen, in denen das Ausglühen wegen der Materialeigenschaften des eingesetzten Nichtmetalls nicht möglich ist, kann man den Niederschlag auch durch Ultraschall absprengen. Zu diesem Zweck ist gemäß einer Weiterbildung der Erfindung ein Ultraschallgenerator vorgesehen, der mit körperschallleitender Verbindung zur Sonde angeordnet ist.

Die Beseitung des Niederschlages durch Ultraschall kann unterstützt werden durch Erwärmen oder Durchglühen der Sonde.

Die Anwendung der Sonde ist vorzugsweise für gasförmige Medien vorgesehen, sie ist aber nicht auf gasförmige Medien beschränkt. Die Sonde läßt sich auch in flüssigen Medien einsetzen. Vorzugsweise wird sie eingesetzt wie auch die eingangs beschriebene bekannte Sonde zur Ermittlung der Abgasqualität in Verbrennungskraftmaschinen. Dabei empfiehlt es sich, daß die Sonde in der Abgasleitung eines Zylinders einer mehrzylindrigen Verbrennungskraftmaschine angeordnet ist, und zwar stromaufwärts der Vereinigung dieser Abgasleitung mit den Abgasleitungen der anderen Zylinder.

Auf diese Weise gelingt es, durch die Meßergebnisse einer Sonde Kenntnisse zu gewinnen über die Arbeitsweise des betreffenden Zylinders. Man kann diese dann gezielt an dem betreffenden Zylinder nachstellen, wenn sich das als notwendig erweisen sollte.

Die Erfindung wird nun anhand der beigefügten Zeichnung näher erläutert.

In der Zeichnung zeigt:
- Figur 1: schematisch eine Brennkraftmaschine bestückt mit Sonden nach der Erfindung,
- Figur 2 und 3: je ein Diagramm zum Betrieb dieser Brennkraftmaschine,
- Figur 4: ein Zwischenflansch im Schnitt,
- Figur 5, 6 und 7: Sonden nach der Erfindung im Schnitt, wie sie unter anderem zum Messen der Gehälter an O₂, C0, HC und/oder H₂O in dem Ausführungsbeispiel nach Figur 1 bis 4 einsetzbar sind,
- Figur 8, 9 und 10: je ein Rasterbild und
- Figur 11: eine Tabelle.

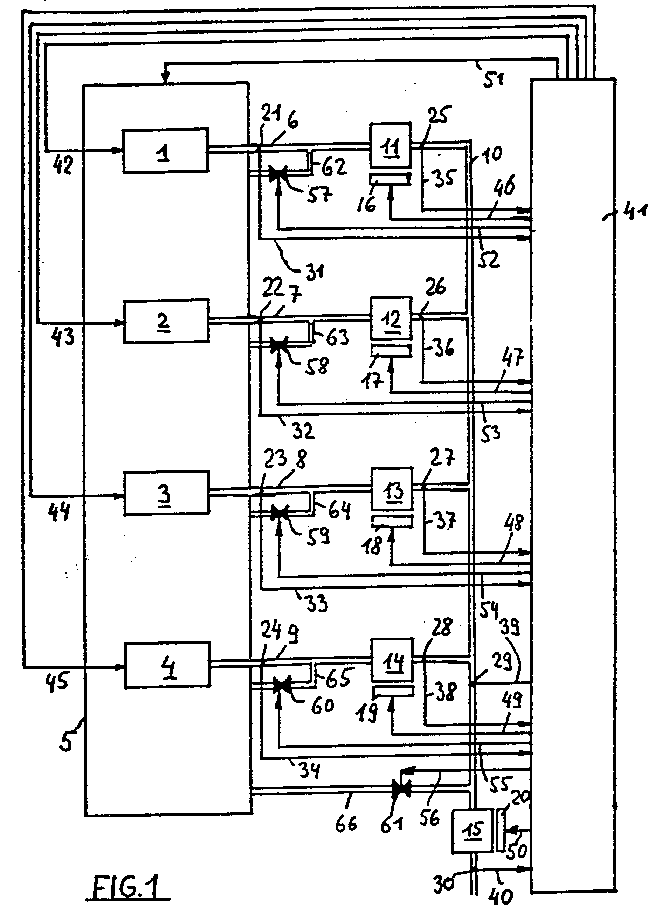

In Figur 1 ist mit 5 eine mit vier Zylindern 1 bis 4 ausgestattete Brennkraftmaschine bezeichnet. Die Abgase dieser Zylinder 1 bis 4 strömen über, den einzelnen Zylinder zugeordnete Einzelleitungen 6 bis 9 in eine Abgassammelleitung 10. In den Einzelleitungen 6 bis 9 ist je ein Katalysator 11 bis 14 vorgesehen und in der Sammelleitung ein Katalysator 15. Die Katalysatoren 11 bis 15 dienen zur katalytischen Nachverbrennung der Abgase. Den Katalysatoren sind Zusatzheizungen 16 bis 20 zugeordnet. In den Einzelleitungen 6, 7, 8 und 9 sind, stromaufwärts dicht hinter dem Austritt aus den zugehörigen Zylindern 1 bis 4 und stromaufwärts des zugehörigen Katalysators 11 bis 14, Meßsonden 21 bis 28 angeordnet. Weitere Meßsonden 29 und 30 sind stromaufwärts und stromabwärts des Katalysators 15 in der Abgassammelleitung 10 und zwar stromabwärts sämtlicher Einmündungen der Einzelleitungen angeordnet. Diese Meßsonden sind über Meßleitungen 31 bis 40 an ein Rechen- und Steuergerät 41 angeschlossen.

Von dem Rechen- und Steuergerät gehen diverse Steuerleitungen aus und zwar Steuerleitungen 42 bis 45 zur individuellen Ansteuerung der Verbrennung in den einzelnen Zylindern. Steuerleitungen 46, 47, 48, 49, 50 zur individuellen Ansteuerung der Zusatzheizungen 16 bis 20, eine Steuerleitung 51 zur Ansteuerung des Betriebes der Brennkraftmaschine 5 und Steuerleitungen 52 bis 56 zur Ansteuerung von Ventilen 57 bis 61.

Diese Ventile 57 bis 61 sind in Gasleitungen 62 bis 66 vorgesehen. Diese Gasleitungen münden in die Einzelleitungen und in die Sammelleitungen und zwar die Gasleitung 62 in die Einzelleitung 6, die Gasleitung 63 in die Einzelleitung 7, die Gasleitung 64 in die Einzelleitung 8, die Gasleitung 65 in die Einzelleitung 9 und die Gasleitung 66 in die Sammelleitung 10. Die Gasleitungen führen an die Verbrennungskraftmaschine 5 und sind dort in nicht dargestellter Weise an die Verbrennungsluftzufuhr angeschlossen, so daß bei geöffnetem zugehörigen Ventil, zum Beispiel dem Ventil 57, Verbrennungsluft in die zugehörige Leitung, zum Beispiel die Einzelleitung 6 strömt und zwar in einem Mengenfluß, der abhängig ist von dem Grad der Öffnung des betreffenden Ventils, das zu diesem Zweck differenziert öffenbar ist.

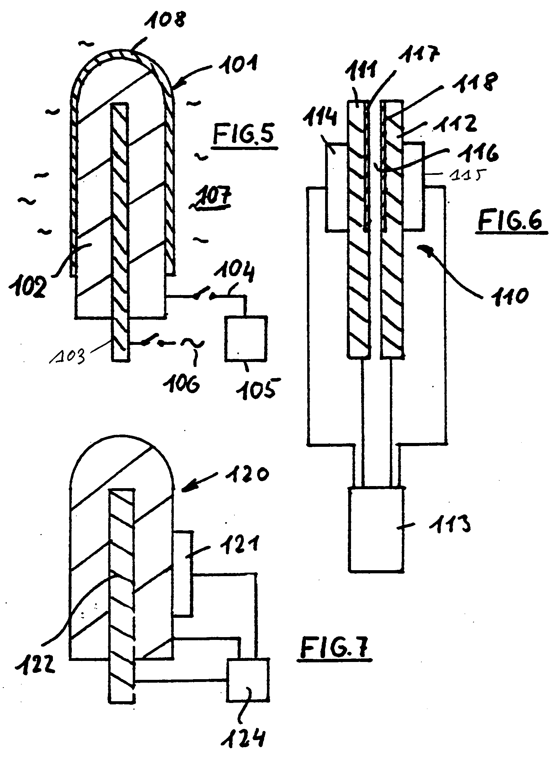

Die gezeichneten Meßsonden 21 bis 30 symbolisieren möglicherweise jede für sich mehrere Meßsonden, die dann über entsprechend vorgesehene, individuelle Meßleitungen an das Rechen- und Steuergerät 41 angeschlossen sind. Dabei handelt es sich um Meßsonden zum Messen von t, p, s und für den Gehalt an O₂, CO, HC und H₂O. Der Einfachheit halber wird nachfolgend immer nur von einer Meßsonde und einem zugehörigen Meßwert gesprochen, obwohl es sich an jeder Meßstelle um mehrere Meßgeräte für verschiedene Meßwerte handeln kann und entsprechend viele Meßwerte gewonnen werden. Die Ausgestaltung der Sonden zur Messung von t, p und s ist konventionell. Die Ausgestaltung der Sonden zur Messung der Gehälter an O₂, CO, HC und H₂O wird weiter unten beschrieben anhand der Figuren 5 bis 7.

Die in den Einzelleitungen gewonnenen Meßwerte dienen dazu, die Verbrennung in dem zugehörigen Zylinder und dem zugehörigen Katalysator anzusteuern zum Zwecke der Optimierung. Sie dienen außerdem dazu, kombinierte Meßwerte zu errechnen, die ebenso wie die in der Sammelleltung 10 gewonnenen Meßwerte oder anstelle dieser dazu dienen können, die Verbrennung in der Brennkraftmaschine 5 und in dem Katalysator 15 anzusteuern, zum Zwecke der Optimierung.

Die Ansteuerung der Verbrennung in den einzelnen Zylindern kann erfolgen durch individuelle Verstellung des Zündverzuges, der Einspritzung, der Verbrennungsluftzufuhr oder dergleichen. Die Ansteuerung der Verbrennung der Brennkraftmaschine kann erfolgen durch Verstellung des Zündvollzuges, der Einspritzung der Verbrennungsluftzufuhr, Drehzahländerung oder dergleichen.

Die Ansteuerung der Nachverbrennung in den Katalysatoren erfolgt durch Einstellung der zugehörigen Zusatzheizung 16 bis 20 und/oder der Verbrennungsluftzufuhr durch Einstellung der zugehöringen Ventile 57 bis 61.

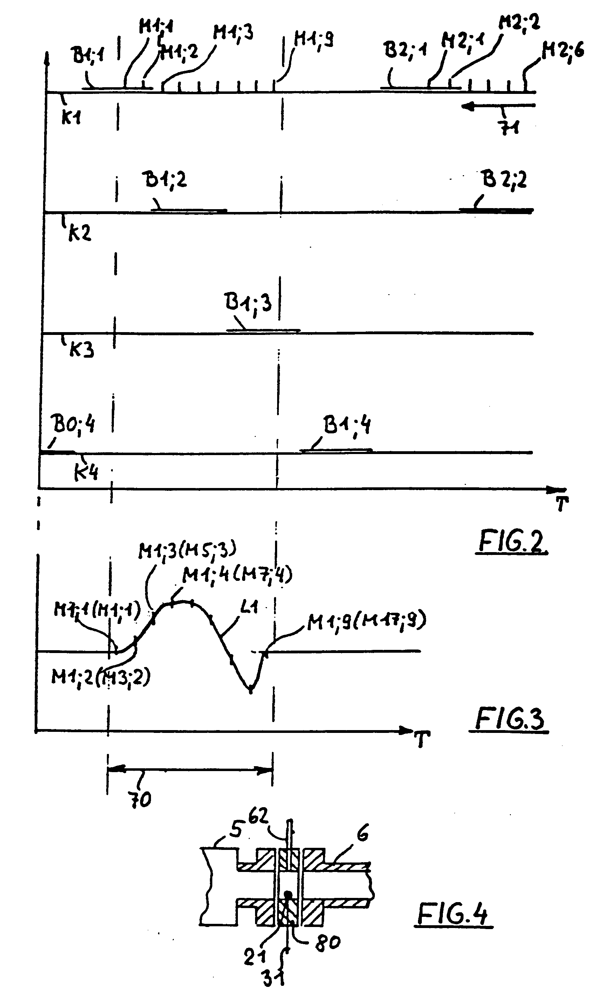

Die Meßwerte in der Sammelleitung 10 werden entweder kontinuierlich oder in einer hinreichenden Taktfolge gewonnen. Die Meßwerte in den Einzelleitungen werden in zeitlicher Abhängigkeit vom Verbrennungstaktverlauf gewonnen, wie dies im einzelnen nun anhand der Figuren 2 und 3 erläutert wird.

In beiden Diagrammen ist auf der waagerechten Achse die Zeit T aufgetragen und zwar in beiden Figuren im gleichen Maßstab. Die Kennlinien K1 bis K4 symbolisieren die Taktfolge der Zylinder 1 bis 4. Mit B1;1 ist der erste betrachtete Verbrennungszyklus des Zylinders 1 bezeichnet. Mit B1;2 ist der erste betrachtete Verbrennungszyklus des Zylinders 2 bezeichnet. Mit B2;1 ist der zweite betrachtete Verbrennungstakt des Zylinders 1 bezeichnet und so fort, wobei der erste Index jeweils fortlaufend den Verbrennungstakt angibt und der zweite Index den betreffenden Zylinder. Für den Verbrennunstakt B1;1 sind die zeitlich aufeinanderfolgenden Meßpunkte M1;1 bis M1;9 vorgesehen, die zeitlich gleichmäßig über einen, dem Verbrennungstakt B;1 zugeordneten Zeitabschnitt verteilt sind, wobei dieser Zeitabschnitt so bemessen ist, daß er die Zeit des zugehörigen Abgasausstoßes aus diesem Zylinder für den betrachteten Verbrennungstakt umfaßt. Der Ausstoß beginnt kurz vor dem M1;1 entsprechenden Zeitpunkt und ist beendet kurz nach dem M1;9 entsprechenden Zeitpunkt. In dem Meßabschnitt 70, der durch die Meßpunkte M1;1 bis M1;9 bestimmt ist, verändert sich die Abgasqualität an der Meßstelle des Meßorgans 21 in der Einzelleitung, bedingt durch den Ausstoß. Kurz danach stellen sich infolge Vermischung mehr oder weniger gleichbleibende Verhältnisse ein bis zum nächstfolgenden Meßabschnitt 71, der entsprechend dem nächstfolgenden Verbrennungstakt B2;1 zugeordnet ist. Die zeitliche Veränderung eines Meßwertes ist durch eine Kennlinie L1 in Figur 3 symbolisiert. Diese Kennlinie hat in dem Meßabschnitt 70 einen, grob gesagt, sinusförmigen Verlauf und ist anschließend bis zum nächsten Meßabschnitt etwa geradlinig. Dabei handelt es sich um eine sehr vergröberte und vereinfachte Darstellung, denn die tatsächliche gemessene Kennlinie L1 ist sehr viel variantenreicher. Sie ist auch unterschiedlich, je nachdem, was für ein Meßwert gemessen wird.
Der Kennlinienverlauf wiederholt sich bei gleichbleibendem Betrieb von Verbrennungstakt zu Verbrennungstakt und sieht für die anderen Zylinder ähnlich aus. Die Feinstruktur dieser Kennlinie gibt Aufschluß über den Verbrennungsvorgang in dem zugeordneten Zylinder und damit die Möglichkeit einer sehr differenzierten Nachsteuerung der Verbrennung im zugehörigen Zylinder beziehungsweise in der genannten Brennkraftmaschine und auch der zugeordneten Nachverbrennung. Um die Meßwerte M1;1 bis M1;9 zu ermitteln, wird ein sehr reaktionsschnelles Meßgerät benötigt. Das steht, angesichts der hohen Taktfolge in modernen Brennkraftmaschinen unter Umständen nicht zur Verfügung. Für diesen Fall behilft man sich mit einer verlängerten Taktfolge der Messungen, die unter der zulässigen Voraussetzung, daß mehrere aufeinanderfolgende Verbrennungsvorgänge in ein und demselben Zylinder im Rahmen der hier betrachteten Genauigkeit identisch verlaufen, vorgesehen sind.

Zur Erläuterung dessen werden die Meßpunkte der aufeinanderfolgenden Takte B1;1, B2;1, B3;1, .... Bn;1 wie folgt bezeichnet: Der erste Meßpunkt von B2;1 wird mit M2;1 bezeichnet, der nächste mit M2;2 und so fort bis M2;9. Die entsprechenden Meßpunkte des nächsten Taktes B3;1 werden mit M3;1 bis M3;9 bezeichnet und so fort, wobei der erste Index die laufenden Nummer des betrachteten Taktes und der zweite Index den Meßpunkt innerhalb des betreffenden Taktes bezeichnet. Es werden nun nicht die Meßpunkte M1;1 bis M1;9 ermittelt, sondern es wird die Kennlinie ermittelt, aufgrund der Meßpunkte M1;1, M3;1, M5;1, M7;1 und so fort bis M17;1, wie dies in Figur 3 in Klammern eingetragen ist. Zwischen dem Meßpunkt M1 und dem Meßpunkt M2 besteht ein zeitlicher Abstand von einem Bruchteil des Zylindertaktes. Zwischen den Meßpunkten M1;1 und M3;2 besteht ein zeitlicher Abstand der etwas größer ist als zwei Zylindertakte. Diesen Abstand kann man noch vergrößern, indem man statt auf zwei Zylindertakte, auf sehr viele Zylindertakte, zum Beispiel auf hundert Zylindertakte vergrößert. Dann ist der erste Meßpunkt für die Gewinnung der Kennlinie L1 M1;1, der zweite Meßpunkt M100;2 und so fort, oder allgemein gesagt: Die Kennlinie L1 wird gebildet aus Meßpunkten Mn;i.
mit
- n =: fortlaufende Zählung der Verbrennungstakte,
- i =: fortlaufende Zählung der Meßpunkte eines Verbrennungstaktes.

Man kann diesen zeitlichen Versatz für die einzelnen verschiedenen Messungen, zum Beispiel die Messung des O2-Gehaltes und die Messung der Temperatur für ein und denselben Zylinder unterschiedlich gestalten, entsprechend der unterschiedlichen Ansprechgeschwindigkeit und Erholungszeit der verschiedenen Meßgeräte.

Zum Anschluß der Meßgeräte und Prüfleitungen und/oder zum Anschluß der Verbrennungsluftzufuhr empfiehlt es sich, wie in Figur 4 dargestellt, einen Zwischenflansch 80 vorzusehen, der stromaufwärts der Einzelleitung 6 zwischen der Einzelleitung und dem zugehörigen Zylinder 1 verschraubt ist. Ein solcher Zwischenflansch 80 kann auch an einer anderen Position der Einzelleitung oder Sammelleitung verschraubt sein. In diesen Zwischenflansch mündet eine Prüfleitung 31, die an das, innerhalb des Flansches angeordnete Meßorgan 21 führt. Außerdem mündet in diesen Zwischenflansch die pneumatische Leitung 62. Das hat den Vorteil, daß man durch Ausschrauben des Zwischenflansches leicht zu Reparatur- und Servicezwecken an die Meßgeräte Zugang gewinnt. Außerdem ist ein solcher Zwischenflansch vorteilhaft bei einer eventuellen Nachrüstung.

Die Sonde 101 aus Figur 5 besteht aus einem Kupferkern 102, in den ein Heizstab 103 eingelassen ist. Der Kupferkern 102 ist über eine elektrische Leitung 104 an einen elektrischen Steuergenerator 105 angeschlossen und der Heizstab 103 ist an eine Stromquelle 106 angeschlossen.

Das vordere Ende der Sonde, das von dem zu vemessenden Medium 107 umströmt wird, ist mit einer Schicht 108 aus elektrisch leitendem Nichtmetall beschichtet, und zwar im Ausführungsbeispiel von Kaliumfulleren K₃C₆₀.

Bei der in Figur 6 dargestellten Sonde 110 sind zwei Elektroden 111, 112 aus Kupfer vorgesehen, die an einen Steuergenerator 113 angeschlossen sind. Beide Elektroden 111 und 112 sind mit je einem elektroakustischen Wandler 114, 115 kontaktiert, die ebenfalls an den Steuergenerator 113 angeschlossen sind. Die beiden Elektroden sind flach einander gegenüberstehend angeordnet und es besteht ein Spalt 116 dazwischen. Auf den einander zugekehrten Seiten sind die Elektroden mit einer Beschichtung 117, 118 aus Nichtmetall, und zwar im Ausführungsbeispiel aus elektrisch leitfähigem Polymerabkömmling, beschichtet. Durch Anlegen elektrischer Spannungen wird auf den freien Oberflächen der Beschichtungen 117, 118 ein elektrisches Potential erzeugt, das den Niederschlag der Meßpartikel aus dem durch den Spalt 116 strömenden Medium dort begünstigt. Der Niederschlag wird dann vermessen durch Ermittlung der Dielektrizitätskonstante und des Ohm'schen Widerstandes und nach der Messung abgesprengt durch kurzzeitiges Einschalten der beiden elektroakustischen Wandler 114, 115. Anschließend wird die Messung wiederholt.

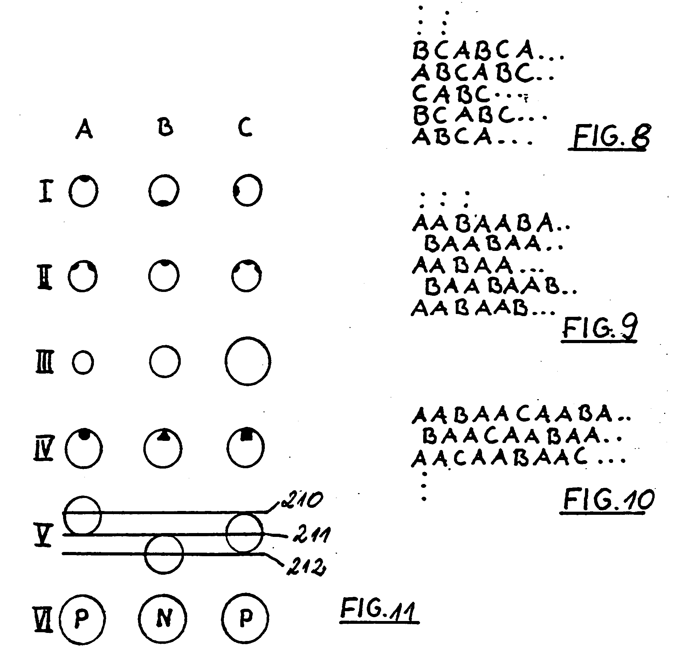

Figur 7 zeigt eine Sonde 120, die massiv ist und durchgehend aus elektrisch leitendem Kunststoff besteht, und zwar aus mit Rb dotiertem Fulleren C₆₀.

Die Sonde 120 ist mit einem elektroakustischen Wandler 121 kontaktiert, weist in ihrem Inneren einen elektrischen Heizstab 122 auf und ist elektrisch an einen Steuergenerator 124 angeschlossen, von dem auch der Wandler 121 und der Heizstab 122 angesteuert beziehungsweise erregt wird.

Die Schichten 108, 117 und 118 können aus dotierten, leitfähigen Fullerenen bestehen oder aus einer Halbleiterschicht, auf deren Kristallflächen die Fullerene, vorzugsweise in einer monomolekularen Schicht, alternativ aber auch in mehreren monomolekularen Schichten, aufgetragen sind. Auch wenn die Schichten nur aus Fullerenen bestehen, können diese jeweils aus einer oder mehreren monomolekularen Schichten bestehen.

In allen diesen Fällen wird die aktive Oberfläche durch die äußerste monomolekulare Schicht der Fullerenmoleküle gebildet. Die Fullerenmoleküle dieser Schicht oder dieser Schichten können aus zwei oder drei Gruppen bestehen, von denen diejenigen der ersten Gruppe gemäß Figur 8, 9 und 10 mit A, diejenigen der zweiten Gruppe mit B und diejenigen der dritten Gruppe mit C bezeichnet sind. Die Moleküle sind im Raster angeordnet wie das in Figur 8 bis 10 durch die Anordnung der Buchstaben angedeutet ist. Die Moleküle der einzelnen Gruppen können sich unterscheiden, wie dies nun anhand der Figur 11 erläutert wird.

In Zeile I aus Figur 11 sind drei unter sich gleiche und gleichdotierte Fullerenmoleküle angezeigt, die sich jedoch hinsichtlich ihrer durch einen schwarzen Punkt gekennzeichneten Dotierung in ihrer sphärischen Anordnung unterscheiden.

In Zeile II sind drei unter sich gleiche Fullerenmoleküle dargestellt, die jedoch unterschiedlich dotiert sind; das eine Molekül mit einem Dotierungselement, das nächste mit zwei Dotierungselementen und das letzte mit drei Dotierungselementen.

In Zeile III sind Fullerenmoleküle dargestellt, die sich durch ihre Größe unterscheiden.

In Zeile IV sind Fullerenmoleküle dargestellt, die sich durch die Art der eingesetzten Dotierung unterscheiden, was zeichnerisch zum Ausdruck gebracht ist, indem die Dotierung einmal durch einen Kreis, einmal durch ein Dreieck und einmal durch ein Viereck dargestellt ist.

In Zeile V sind identische Fullerenmoleküle dargestellt, die jedoch in unterschiedlichen Ebenen 210, 211, 212 angeordnet sind, wobei die beiden außen gelegenen Ebenen 210 und 212 einen Abstand in der Größenordnung des Durchmessers eines Fullerenmoleküls aufweisen.

In Zeile VI sind die Fullerenmoleküle mit dem Leitfähigkeitstyp p, n und p dotiert.

Der ersten Gruppe, gekennzeichnet durch den Buchstaben A, sind diejenigen Moleküle der Zeilen I bis V zugeordnet, die in Spalte A stehen und so fort für Spalte B und Spalte C. Die Zeilen I bis VI definieren in Verbindung mit Figur 5 jeweils ein Ausführungsbeispiel für sich. Entsprechendes gilt für die Figuren 6 und 7. Bei diesen sich daraus ergebenden 3 x 6 = 18 Ausführungsbeispielen unterscheiden sich die Fullerene immer nur durch ein einziges Kriterium. Es sind weitere Ausführungsbeispiele möglich, bei denen sich die Moleküle der einzelnen Gruppen A, B und C durch zwei, drei oder mehr derjenigen durch die Zeilen I bis V definierten Kriterien unterscheiden.

Weitere Abänderungen sind möglich, indem man mehr als drei Gruppen einsetzt. Man kann auch in Abänderung des Rasters nach Figur 8 den einzelnen Gruppen eine unterschiedliche Anzahl von Mitgliedern zuordnen. Wesentlich ist nur, daß sich in der aktiven Oberfläche ein durchgehend gleichförmiges Raster ergibt, so daß die aktiven Elemente gleichmäßig über die aktive Oberfläche verteilt sind. Es können dann sämtliche eingesetzte Fullerenmoleküle einer monomolekularen Schicht aktive Elemente bilden, es können aber auch, je nach der Anordnung, nur ausgewählte Moleküle einer monomolekularen Schicht aktive Elemente bilden, zum Beispiel nur die Moleküle A bei den Ausführungsbeispielen gemäß Zeile V aus Figur 11.

## Patentansprüche

1. Sonde für einen Partikelsensor,
- auf deren aktiver Oberfläche zum Messen der Beladung eines Mediums mit Meßpartikeln diese aus dem an der Sonde vorbeiströmenden Medium niedergeschlagen werden,
- dann im Niederschlag vermessen und beseitigt werden,
- die einen elektrischen Steuergenerator (105, 113, 124) sowie Mittel (103, 115, 121) zur Beseitigung des Niederschlages aus den Meßpartikeln aufweist,
dadurch gekennzeichnet,
daß die aktive Oberfläche (108) der Sonde (101) aus elektrisch leitendem Nichtmetall besteht.

2. Sonde nach Anspruch 1, dadurch gekennzeichnet,
daß mindestens der die aktive Oberfläche ( 108 ) bildende Teil der Sonde ( 101 ) massiv aus dem elektrisch leitenden Nichtmetall besteht.

3. Sonde nach Anspruch 1 oder 2, dadurch gekennzeichnet,
daß als Nichtmetall eingesetzt ist:
Fulleren - sogenannte Käfigmoleküle aus sphärisch angeordneten C-Atomen - vorzugsweise mit der chemischen Summenformel XᵣC₂ₙ,
mit:
X = H, Li, Na, K, Rb, Cs und/oder Fr;
r = 0, 1, 2 ...;
n = 16, 17, 18 .... .

4. Sonde nach Anspruch 3, dadurch gekennzeichnet,
daß zur Begünstigung der elektrischen Stromleitung Fremdatome, vorzugsweise H, Li, Na, K, Rb, Cs und/oder Fr dem Fulleren durch Dotierung, Einlagerung, Anlagerung und/oder Beimischung zugefügt sind, vorzugsweise entsprechend der Summenformel K₃C₆₀.

5. Sonde nach einem der vorhergehenden Ansprüche, dadurch gekennzeichnet,
daß die die aktive Oberfläche bildenden Fullerene hinsichtlich ihrer Dotierung mit gleicher sphärischer Orientierung angeordnet sind.

6. Sonde nach einem der Ansprüche 1 bis 5, dadurch gekennzeichnet,
daß die die aktive Oberfläche bildenden Fullerene in mehrere Gruppen unterteilt sind,
daß die Fullerene der einzelnen Gruppen gemischt, ein Rasterbildend angeordnet sind,
daß die Fullerene einer Gruppe unter sich gleichgroß, gleichdotiert und mit Bezug auf ihre Dotierung sphärisch gleich orientiert angeordnet sind und
daß die Fullerene unterschiedlicher Gruppen sich hinsichtlich Größe, Dotierung, sphärischer Anordung und/oder ihrer Anordnung in verschiedenen Ebenen voneinander unterscheiden.

7. Sonde nach einem der vorhergehenden Ansprüche, dadurch gekennzeichnet,
daß die Fullerene auf die Kristallflächen eines Halbleiters, vorzugsweise Galliumarsenid, Gallium-Aluminiumarsenid, Aluminium-Galliumarsenid, Indiumphosphid oder Indiumgalliumarsenid, aufgewachsen sind.

8. Sonde nach Anspruch 1 oder 2, dadurch gekennzeichnet,
daß als Nichtmetall eingesetzt ist:
elektrisch leitende Keramik.

9. Sonde nach Anspruch 1 oder 2, dadurch gekennzeichnet,
daß als Nichtmetall eingesetzt ist:
supraleitfähige Keramik.

10. Sonde nach Anspruch 1 oder 2, dadurch gekennzeichnet,
daß als Nichtmetall eingesetzt ist:
elektrisch leitfähiger Kunststoff, vorzugsweise Polymere, Polymerabkömmlinge, Polyacetylen, Polyparaphenylen, Polypyrrol, Polythiophen und/oder Polyanilin,
oder leitfähige oder superleitfähige Keramik.

11. Sonde nach Anspruch 1 oder 2, dadurch gekennzeichnet,
daß als Nichtmetall eingesetzt ist:
elektrisch leitendes Metalloxyd.

12. Sonde nach einem der vorhergehenden Ansprüche, dadurch gekennzeichnet,
daß zur Beseitung des Niederschlages aus den Meßpartikeln ein Ultraschallgenerator ( 114, 115) vorgesehen ist, der mit körperschallleitender Verbindung zur Sonde ( 110 ) angeordnet ist.

13. Verwendung einer Sonde nach einem der vorhergehenden Ansprüche in einem in einer mehrzylindrigen Verbrennungskraftmaschine angeordneten Partikelsensor, dadurch gekennzeichnet,
daß die Sonde ( 21 ) in der Abgasleitung eines Zylinders der mehrzylindrigen Verbrennungskraftmaschine angeordnet ist, und zwar stromaufwärts der Vereinigung dieser Abgasleitung mit den Abgasleitungen der anderen Zylinder.

## Claims

1. Probe for a particle sensor, on the active surface of which, for measuring the charging of a medium with measuring particles, the said particles are precipitated from the medium flowing past the probe and are then measured in the precipitate and removed, that is equipped with an electric pilot frequency generator connected to the probe and means for removal of the precipitate from the measuring particles, characterised in that the active surface (108) of the probe (101) consists of electrically conducting non-metal.

2. Probe according to Claim 1, characterised in that at least the part of the probe (101) forming the active sur-face (108) consists solidly of the electrically conducting non-metal.

3. Probe according to Claim 1 or 2, characterised in that, as the non-metal, use is made of:
fullerene - so-called cage molecules of spherically arranged C atoms - preferably of the chemical total formula XᵣC₂ₙ,
where:
X = H, Li, Na, K, Rb, Cs and/or Fr;
r = 0, 1, 2 ...;
n = 16, 17, 18 ... .

4. Probe according to Claim 3, characterised in that, to promote electric current conduction, foreign atoms, preferably H, Li, Na, K, Rb, Cs and/or Fr are added to the fullerene by doping, inclusion, attachment and/or admixture, preferably corresponding to the total formula K₃C₆₀.

5. Probe according to one of the preceding claims, characterised in that the fullerenes forming the active surface are arranged with the same spherical orientation with regard to their doping.

6. Probe according to one of Claims 1 to 5, characterised in that the fullerenes forming the active surface are subdivided into a plurality of groups, in that the fullerenes of the individual groups are arranged in a mixed manner, forming a grid, in that the fullerenes of one group are the same size as one another, doped the same and arranged with the same spherical orientation with respect to their doping and in that the fullerenes of different groups differ from one another with regard to size, doping, spherical arrangement and/or their arrangement in different planes.

7. Probe according to one of the preceding claims, characterised in that the fullerenes are grown onto the crystal faces of a semiconductor, preferably gallium arsenide, gallium-aluminium arsenide, aluminium-gallium arsenide, indium phosphide or indium-gallium arsenide.

8. Probe according to Claim 1 or 2, characterised in that, as the non-metal, use is made of:
electrically conducting ceramic.

9. Probe according to Claim 1 or 2, characterised in that, as the non-metal, use is made of:
superconductive ceramic.

10. Probe according to Claim 1 or 2, characterised in that, as the non-metal, use is made of:
electrically conductive plastic, preferably polymers, polymer derivatives, polyacetylene, polyparaphenylene, polypyrrol, polythiophene and/or polyaniline, or conductive or superconductive ceramic.

11. Probe according to Claim 1 or 2, characterised in that, as the non-metal, use is made of:
electrically conducting metal oxide.

12. Probe according to one of the preceding claims, characterised in that, for removing the precipitate comprising the measuring particles, an ultrasonic generator (114, 115) is provided, which is arranged with structure-borne-sound-conducting connection to the probe (110).

13. Application of a probe according to one of the preceding claims within a particle sensor arranged in a muli-cylinder internal-combustion engine, characterised in that the probe (21) is arranged in the exhaust pipe of a cylinder of the multy-cylinder internal-combustion engine, to be precise upstream of the union of this exhaust pipe with the exhaust pipes of the other cylinders.

## Revendications

1. Sonde destinée à un capteur de particules,
- sur la surface active de laquelle, en vue de la mesure de la teneur d'un milieu en particules de mesure on dépose celles-ci depuis le milieu qui s'écoule le long de la sonde,
- on les mesure alors dans le dépôt et on les élimine,
- et qui comprend un générateur électrique de commande (105, 113, 124), ainsi que des moyens (103, 115, 121) pour éliminer le dépôt de particules de mesure,
caractérisée par le fait que :
- la surface active (108) de la sonde (101) est constituée par une matière non métallique conductrice de l'électricité.

2. Sonde selon la revendication 1, caractérisée par le fait qu'au moins la partie de la sonde (101) qui constitue la surface active (108) est constituée d'une manière massive par la matière non métallique conductrice de l'électricité.

3. Sonde selon la revendication 1 ou 2, caractérisée par le fait que l'on utilise comme matière non métallique des fullerènes - ce que l'on appelle des molécules en forme de cage constituées par des atomes de C disposés selon une sphère -, qui présentent de préférence la formule chimique brute XᵣC₂ₙ, où :
X = H, Li, Na, K, Rb, Cs et/ou Fr;
r = 0, 1, 2 ...;
n = 16, 17, 18 ... .

4. Sonde selon la revendication 3, caractérisée par le fait qu'en vue de favoriser la conduction du courant électrique, on ajoute au fullerène des atomes étrangers, et de préférence H, Li, Na, K, Rb, Cs et/ou Fr, par dopage, par inclusion, par piégeage et/ou par mélange, de préférence selon la formule globale K₃C₆₀.

5. Sonde selon l'une des revendications précédentes, caractérisée par le fait que les fullerènes qui constituent la surface active sont disposés selon la même orientation dans la sphère en ce qui concerne leur dopage.

6. Sonde selon l'une des revendications 1 à 5, caractérisée par le fait :
que les fullerènes qui constituent la surface active sont répart is en plusieurs groupes,
que les fullerènes des divers groupes sont mélangés et disposés en constituant un réseau,
que les fullerènes d'un groupe sont disposés en présentant la même taille, en étant dopés de la même façon et en étant orientés dans la sphère de la même manière en ce qui concerne leur dopage, et :
que les fullerènes de groupes différents diffèrent entre eux quant à leur taille, à leur dopage, à la disposition de celui-ci dans la sphère et/ou à leur disposition dans des plans différents.

7. Sonde selon l'une des revendications précédentes, caractérisée par le fait que les fullerènes sont obtenus par épitaxie sur les surfaces cristallines d'un semi-conducteur qui est de préférence de l'arséniure de gallium, de l'arséniure d'aluminium et de gallium, de l'arséniure de gallium et d'aluminium, du phosphure d'indium ou de l'arséniure de gallium et d'indium.

8. Sonde selon la revendication 1 ou 2, caractérisée par le fait que l'on utilise comme matière non métallique une céramique conductrice de l'électricité.

9. Sonde selon la revendication 1 ou 2, caractérisée par le fait que l'on utilise comme matière non métallique une céramique supraconductrice.

10. Sonde selon la revendication 1 ou 2, caractérisée par le fait que l'on utilise comme matière non métallique une matière plastique conductrice de l'électricité, et de préférence des polymères, des dérivés de polymères, du polyacétylène, du polyparaphénylène, du polypyrrol, du polythiophène et/ou de la polyaniline, ou une céramique conductrice ou supraconductrice.

11. Sonde selon la revendication 1 ou 2, caractérisée par le fait que l'on utilise comme matière non métallique un oxyde métallique conducteur de l'électricité.

12. Sonde selon l'une des revendications précédentes, caractérisée par le fait qu'en vue de l'élimination du dépôt de particules de mesure, il est prévu un générateur d'ultrasons (114, 115) qui est disposé par rapport à la sonde (110) en présentant une liaison de conduction phonique.

13. Utilisation d'une sonde selon l'une des revendications précédentes dans un capteur de particules disposé dans un moteur à combustion interne à plusieurs cylindres, caractérisée par le fait que la sonde (21) est disposée dans le conduit destiné aux gaz d'échappement d'un cylindre du moteur à combustion interne à plusieurs cylindres, et ce, en amont de l'endroit où ce conduit destiné aux gaz d'échappement rejoint les conduits destinés aux gaz d'échappement des autres cylindres.
